# EUROPEAN PATENT APPLICATION

(11) **EP 4 793 518 A1**
(43) Date of publication of application: **19.08.2026**
(21) Application number: 25221411.9
(22) Date of filing: 08.12.2025
(51) Int. Cl.: F16C 33/10, F16C 33/12, F16C 33/24, F16C 33/14

(54) **SLIDING MEMBER**

(30) Priority: 17.02.2025 JP 2025023477
(71) Applicant: Daido Metal Co., Ltd., Nagoya-shi, Aichi 460-0008 (JP)
(72) Inventor: HANEDA, Yuma, Inuyama-shi, Aichi 484-0061 (JP)
(74) Representative: AOMB Polska Sp. z.o.o.

(57) **Abstract**

A sliding member (10) includes: a base material (11) that contains Al as a main component and has a surface hardness of HV 110 or lower; and a lubricating surface layer portion (14) that is provided on a sliding side of the base material (11) and contains a solid lubricant (16). In the lubricating surface layer portion (14), a base material surface (17) that is a surface of the base material (11) and the solid lubricant (16) are exposed. In the sliding member (10), when A (%) represents an area ratio that is occupied by the exposed solid lubricant (16), in an observation region (21) which is set on a sliding surface (15), D represents a standard deviation in the observation region (21) that is obtained by dividing the observation region (21) into nine unit regions (22) and then from a ratio of area occupied by the solid lubricant (16) for each of the nine unit regions, and a coefficient of variation B = D/A has been calculated, 10≤A≤40 and 0.1≤B≤0.3 hold.

## Description

### BACKGROUND OF THE INVENTION

### Field of the Invention

The present embodiment relates to a sliding member that includes a base material containing Al as a main component.

### Description of the Related Art

Conventionally, a bearing that includes a base material containing Al as a main component has been used as a sliding member which is used in an internal combustion engine of a vehicle or the like. Such a sliding member includes a lubricating surface layer portion that contains a solid lubricant on a surface side which slides against a counterpart member, in order to improve seizure resistance (see Japanese Patent Laid-Open No. 2005-233267). In other words, the solid lubricant contained in the lubricating surface layer portion reduces the coefficient of friction and improves the seizure resistance.

However, the solid lubricant is distributed substantially uniformly over the whole surface of the lubricating surface layer portion. Because of this, the solid lubricant contained in the lubricating surface layer portion quickly transfers to the counterpart member as soon as the sliding against the counterpart member starts. In other words, the solid lubricant contained in the lubricating surface layer portion adheres to the counterpart member as soon as the sliding starts. Then, the solid lubricant that has transferred to the counterpart member disappears as the sliding continues, without settling on the counterpart member. Because of this, the lubricating surface layer portion is worn out at an early stage with the start of sliding, and becomes difficult to be retained for a long period of time, which causes a problem of a decrease in the seizure resistance in a short period of time.

Patent Literature 1: JP-A-2005-233267

Then, the present invention is directed at providing a sliding member that promotes the settlement of the solid lubricant onto the counterpart member and maintains the seizure resistance for a long period of time.

### SUMMARY OF THE INVENTION

The sliding member of the present disclosure includes: a base material that contains Al as a main component and has a surface hardness of HV 110 or lower; and a lubricating surface layer portion that is provided on the side of the base material, which slides against a counterpart member, and contains a solid lubricant. The lubricating surface layer portion has a sliding surface on the counterpart member side; and on the sliding surface, a base material surface which is a surface of the base material, and the solid lubricant are exposed. In the sliding member of the present disclosure, an arbitrary observation region is set on the sliding surface, in which an area S of 30 µm × 30 µm is S = 900 µm²; in the observation region, when an area occupied by the exposed solid lubricant is defined as Sp, and an area ratio A (%) is defined as area ratio A = Sp/S ×100; and when the observation region is divided into nine unit regions of 10 µm × 10 µm, a standard deviation in the observation region obtained from a ratio of an area occupied by the solid lubricant in each of the nine unit regions is defined as D, and a coefficient of variation B is defined as coefficient of variation B=D/A, $10 \leq A \leq 40 ,$ and $0.1 \leq B \leq 0.3$ hold.

As described above, in the sliding member of the present disclosure, the base material surface which is the surface of the Al-based base material, and the solid lubricant are exposed on the sliding surface which slides against the counterpart member. In addition, in the observation region which has been set in advance on the sliding surface, the area ratio (%) occupied by the solid lubricant and the coefficient of variation B based on the standard deviation D of the unit regions which have been divided in the observation region fall within the set ranges. This indicates that the base material surface and the solid lubricant exposed on the sliding surface are not uniformly distributed but are distributed with a bias. In other words, in the sliding surface, there are irregularly distributed regions in which the base material surface is mainly exposed, and regions in which the solid lubricant is mainly exposed. Because of this, when the sliding member slides against the counterpart member, the solid lubricant transfers to the counterpart member at an early stage, in the region in which the solid lubricant is mainly exposed. At the same time, in the region in which the base material surface is mainly exposed, the base material forming the base material surface adheres to the counterpart member. As a result, not only the solid lubricant transfers and adheres to the counterpart member, but also the base material adheres to the counterpart member. In addition, the solid lubricant contained in the base material is retained by the counterpart member together with the base material. Furthermore, the solid lubricant which has transferred from the lubricating surface layer portion adheres to the base material which has adhered to the counterpart member. In other words, the solid lubricant is retained on the surface of the base material which has adhered to the counterpart member, and is also contained in the base material which has adhered. Because of this, the solid lubricant is retained on the counterpart member side for a long period of time. As these results, the solid lubricant is retained between the lubricating surface layer portion and the counterpart member for a long period of time. Accordingly, the settlement of the solid lubricant on the counterpart member can be promoted, and the seizure resistance can be maintained for a long period of time.

### BRIEF DESCRIPTION OF THE DRAWINGS

FIG. 1 shows a schematic view showing a sliding member according to one embodiment;
FIG. 2 shows a schematic diagram showing a sliding surface of a sliding member according to one embodiment, which is viewed from the direction of the arrow II in FIG. 1;
FIG. 3 shows a schematic diagram for explaining an observation region and unit regions, in FIG. 2;
FIG. 4 shows a schematic diagram showing a sliding member and a counterpart member according to one embodiment;
FIG. 5 shows a schematic view showing a bearing to which a sliding member according to one embodiment is applied;
FIG. 6 shows a schematic diagram showing conditions of a seizure resistance test of a sliding member according to one embodiment;
FIG. 7 shows a schematic diagram showing a relationship between time and a load applied to a sample, in a seizure resistance test of a sliding member according to one embodiment;
FIG. 8 shows a schematic view showing a test apparatus which is used for evaluating a seizure resistance of a sliding member, according to one embodiment;
FIG. 9 shows a schematic diagram showing a change in a back surface temperature of a bearing, with a change in a load, in a seizure resistance test of a sliding member according to one embodiment;
FIG. 10 shows a schematic diagram showing results of seizure resistance tests in Examples and Comparative Examples of the sliding member according to one embodiment;
FIG. 11 shows a schematic diagram showing results of seizure resistance tests in Example and Comparative Example of the sliding member according to one embodiment;
FIG. 12 shows a schematic diagram showing results of seizure resistance tests in Example and Comparative Example of the sliding member according to one embodiment; and
FIG. 13 shows a schematic diagram showing results of seizure resistance tests in Examples of the sliding member according to one embodiment.

### DETAILED DESCRIPTION OF THE INVENTION

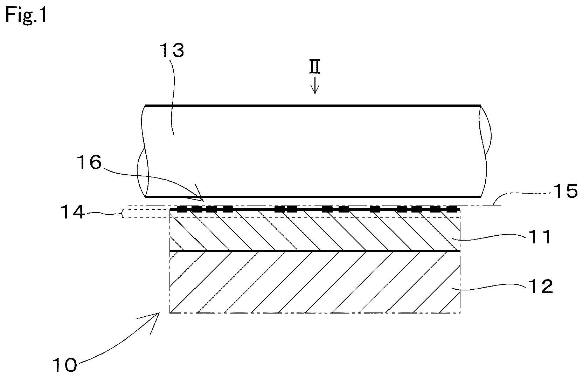

A sliding member according to one embodiment will be described below with reference to the drawings. As is shown in FIG. 1, a sliding member 10 according to one embodiment includes a base material 11. The base material 11 is an Al-based alloy that contains Al as a main component. In the base material 11, the surface hardness is set to HV 110 or lower. The Al-based alloy that forms the base material 11 contains less than 30 mass% of additive elements other than Al. In other words, the base material 11 has an Al concentration C of 70 mass% or more. As the additive elements to be added to the base material 11, one or more elements are used which are selected from Sn, Zn, Si, Cu, V, Mn, Ti, Mg, Ni and Zr. The sliding member 10 may include a backing metal layer 12. Examples of metals to be used for the backing metal layer 12 include iron alloys such as hypoeutectoid steel or stainless steel, copper, and copper alloys. Note that the Al-based alloy that forms the base material 11 contains inevitable impurities in addition to the additive elements.

The sliding member 10 includes a lubricating surface layer portion 14 on a surface side of the base material 11, in other words, on a side sliding against the counterpart member 13. The lubricating surface layer portion 14 is provided on the outermost surface side of the base material 11 in contact with the counterpart member 13, and forms a sliding surface 15 on a surface which faces the counterpart member 13. In other words, the sliding member 10 slides against the counterpart member 13 on the sliding surface 15. The lubricating surface layer portion 14 contains a solid lubricant 16 together with the base material 11. Substances to be used as the solid lubricant 16 include molybdenum disulfide (MoS₂), graphite, boron nitride (BN), tungsten disulfide (WS₂), fluorinated graphite (CF), melamine cyanurate (MCA), and the like. As the solid lubricant 16, one substance may be used or two or more may be used in combination.

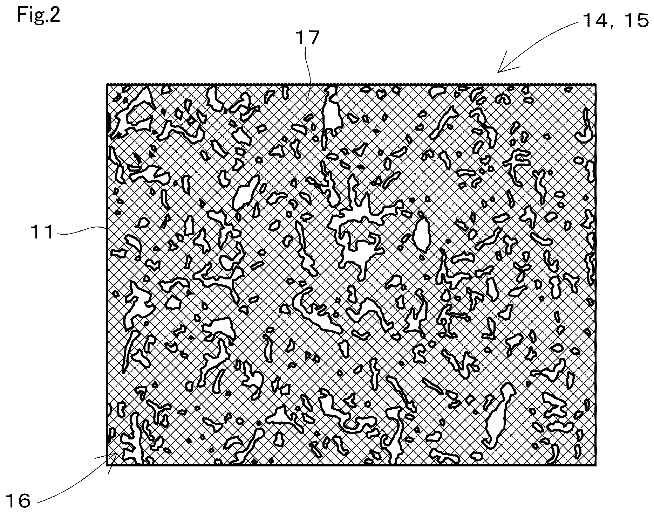

The lubricating surface layer portion 14 contains the solid lubricant 16 in an Al-based alloy that forms the base material 11. Because of this, on the sliding surface 15 which is an end surface of the lubricating surface layer portion 14, a base material surface 17 which is a surface of the base material 11, and the solid lubricant 16 are exposed as is shown in FIG. 2. In the sliding surface 15, the solid lubricant 16 and the base material surface 17 becomes an irregular state in which the bias occurs in the distribution. FIG. 2 is a schematic diagram showing the sliding surface 15 of the sliding member 10. The sliding surface 15 of the sliding member 10 shows a state in which a large number of island-shaped solid lubricants 16 are exposed on the base material surface 17. A shaded portion in FIG. 2 indicates the base material surface 17. For information, FIG. 1 shows a state in which the solid lubricant 16 has adhered to the base material surface 17 while forming a step, for the sake of simplicity. However, the solid lubricant 16 is buried in the base material 11 by the processing of the sliding surface 15, and forms a surface substantially flat with the base material surface 17.

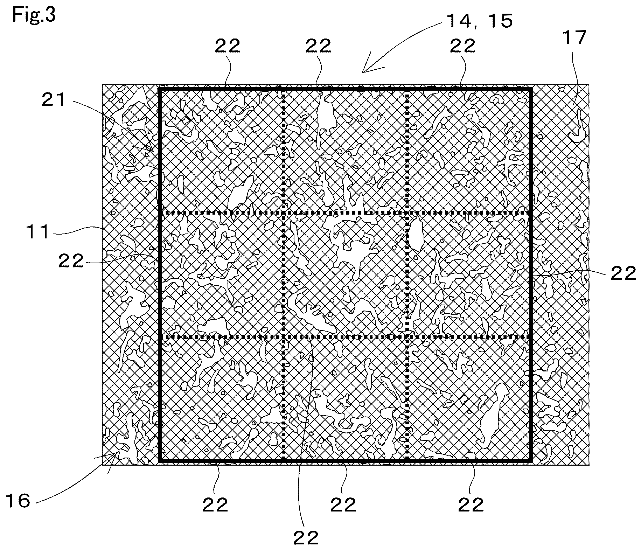

In the sliding surface 15 shown in FIG. 2, an area ratio A and a coefficient of variation B are in the set ranges. The area ratio A and the coefficient of variation B will be described below in detail. As is shown in FIG. 3, an arbitrary observation region 21 of 30 µm ×30 µm is set, on the sliding surface 15. The inside of a range surrounded by the thick solid line in FIG. 3 is the observation region 21. The observation region 21 can be set at any position on the sliding surface 15 that is formed on the lubricating surface layer portion 14 of the sliding member 10. An area S of the observation region 21 having the above dimensions is S = 900 µm². In the observation region 21 set in the lubricating surface layer portion 14, the solid lubricant 16 and the base material surface 17 are exposed as described above. In the observation region 21, the area occupied by the exposed solid lubricant 16 is defined as an area Sp. At this time, the area ratio A (%) is calculated as A = Sp/S × 100.

In this case, in the observation region 21, it is determined that a region containing 7 mass% or more of the element constituting the solid lubricant 16 contains the solid lubricant 16. The element constituting the solid lubricant 16 means, for example, when the solid lubricant 16 is composed of a single element such as graphite, the element, that is, carbon (C). In addition, in a case where the solid lubricant 16 is composed of a compound of two or more elements, the element means an element having the largest atomic weight. For example, in the case of MoS₂, the element having the largest atomic weight is Mo. In addition, for example, in the case of WS₂, the element having the largest atomic weight is W, and in the case of CF, the element having the largest atomic weight is F. Hereinafter, the element constituting the solid lubricant 16 is referred to as "constituent element".

In the region of the lubricating surface layer portion 14, in which the solid lubricant 16 is determined to exist, the thickness of the solid lubricant 16 is 0.005 µm to 5 µm. For information, even in a region in which it has been determined that the solid lubricant 16 does not exist according to the above described criteria, in other words, even in a region which is determined as the base material surface 17, if the content is less than 7 mass%, the constituent element of the solid lubricant 16 may be contained. The constituent elements in the observation region 21 are analyzed with the use of an electron-beam microanalyzer (EPMA: JXA-8530F manufactured by JEOL Ltd.).

Next, the coefficient of variation B will be described. When the observation region 21 has been divided into unit regions 22 as are indicated by a thick broken line in FIG. 3, the coefficient of variation B is calculated on the basis of a standard deviation D of the ratio of the area of the solid lubricant 16 in the observation region 21. Specifically, the observation region 21 is divided into nine unit regions of 10 µm × 10 µm. For each of the nine unit regions 22, a ratio ri (i = 1 to 9) of the area occupied by the solid lubricant 16 is calculated. Then, on the basis of the calculated ratio ri of the area of each unit region, the standard deviation D of the ratio of the area occupied by the solid lubricant 16 in the whole of the observation region 21 is calculated. The coefficient of variation B is calculated by division of the standard deviation D by the above described area ratio A (%), in other words, as B=D/A.

At this time, the area ratio A (%) and the coefficient of variation B in the sliding member 10 according to the present embodiment satisfy $10 \leq A \leq 40$ and $0.1 \leq B \leq 0.3 .$

When the area ratio A becomes smaller than 10%, an effect of improving the seizure resistance cannot be obtained. On the other hand, when the area ratio A exceeds 40%, it becomes difficult to adjust the coefficient of variation B. In this case, from the viewpoint of adjusting the coefficient of variation B for improving the seizure resistance, it is more preferable that the area ratio A is 30% or smaller.

When the area ratio A and the coefficient of variation B of the sliding member 10 are set in this way, it is possible to improve the seizure resistance of the sliding member 10 of the present embodiment, for a long period of time. The area ratio A indicates a ratio of the area of the solid lubricant 16 which is exposed on the sliding surface 15 to the area of the base material surface 17. In other words, when the area ratio A becomes large, the ratio of the area of the solid lubricant 16 which is exposed to the sliding surface 15 becomes relatively large, and the ratio of the area of the base material surface 17 becomes small. On the other hand, when the area ratio A becomes small, the ratio of the area of the solid lubricant 16 which is exposed to the sliding surface 15 becomes relatively small, and the ratio of the area of the base material surface 17 becomes large. In addition, the coefficient of variation B indicates a degree of dispersion of the solid lubricants 16 which are exposed on the sliding surface 15. In other words, the smaller the coefficient of variation B is, the more uniformly the solid lubricants 16 are dispersed on the sliding surface 15, and the larger the coefficient of variation B is, the more non-uniformly the solid lubricants 16 are dispersed. Accordingly, when the coefficient of variation B is in the above range of 0.1≤B≤0.3, the coefficient indicates that the solid lubricant 16 is distributed on the sliding surface 15 with an appropriate bias of the density.

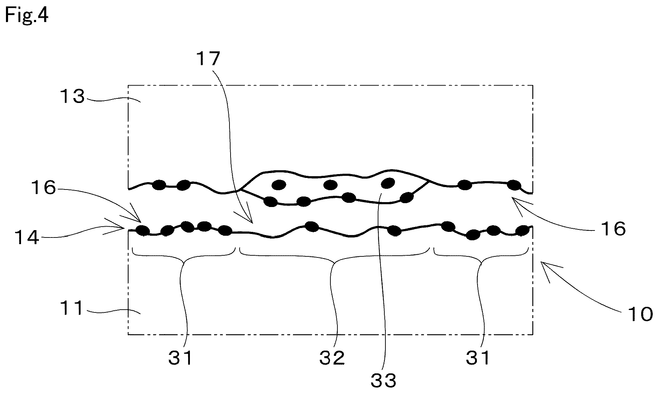

As described above, in the present embodiment, the solid lubricant 16 and the base material surface 17 which are exposed on the sliding surface 15 are not uniformly distributed, but are distributed with a bias. In other words, in the case of the present embodiment, in the end surface on the counterpart member 13 side of the sliding member 10, there exist irregularly a first region 31 in which the solid lubricant 16 is mainly exposed and a second region 32 in which the base material surface 17 is mainly exposed, as are shown in FIG. 4. Because of this, when the sliding member 10 and the counterpart member 13 slide with each other, the solid lubricant 16 comes into contact with the counterpart member 13 in the first region 31 of the sliding surface 15 in which the solid lubricant 16 is mainly exposed, and the solid lubricant 16 contained in the lubricating surface layer portion 14 transfers to the counterpart member 13. At the same time, in the second region 32 in which the base material surface 17 is mainly exposed, the base material 11 that forms the base material surface 17 is in contact with the counterpart member 13, and the Al-based alloy of the base material 11 that forms the lubricating surface layer portion 14 transfers to the counterpart member 13. Because of this, the base material 11 which has transferred from the sliding member 10 adheres to the counterpart member 13 as a base material region 33. In other words, not only the solid lubricant 16 transfers from the lubricating surface layer portion 14 and adheres to the counterpart member 13, but also the base material 11 adheres to the counterpart member 13. Because of this, on the counterpart member 13, not only the solid lubricant 16 is formed, but also the base material region 33 is formed in which the base material 11 adheres to a part of the counterpart member 13. In addition, the solid lubricant 16 which has transferred from the lubricating surface layer portion 14 also attached to the base material region 33. In addition, the base material region 33 includes the solid lubricant 16 contained in the base material 11 which has transferred from the lubricating surface layer portion 14. Because of this, the base material region 33 to which the base material 11 has adhered stably retains the solid lubricant 16 on the counterpart member 13 side, for a long period of time. In this case, the solid lubricant 16 is retained in the sliding portion between the counterpart member 13 and the sliding member 10 for a long period of time, due to the appropriate setting of the area ratio A and the coefficient of variation B.

It is preferable for the solid lubricant 16 to be a sulfide of a metal, and is particularly preferable to be MoS₂ or WS₂. The solid lubricant 16 formed from a metal sulfide has a property of being highly bondable to the base material 11 and being difficult to peel off from the base material 11. The base material 11 is transfers from the sliding member 10 and adheres to the counterpart member 13 by sliding between the sliding member 10 and the counterpart member 13. At this time, the solid lubricant 16 adheres to the base material region 33 formed on the counterpart member 13. By use of a sulfide of a metal as the solid lubricant 16, the solid lubricant 16 is more firmly adhered to the base material region 33. As a result, the solid lubricant 16 formed from the sulfide of the metal can be retained between the sliding member 10 and the counterpart member 13, for a longer period of time.

Next, a method of manufacturing the sliding member 10 according to the above embodiment will be described.

The sliding member 10 is manufactured by coating the Al-based base material 11 with the solid lubricant 16. In this case, as for the solid lubricant 16, for example, a fine powder of the solid lubricant 16 is sprayed onto the surface of the base material 11. In particular, the powder of the solid lubricant 16 is collided against the surface of the base material 11 at high speed by, for example, shot peening; and thereby coats the surface. The solid lubricant 16 is caused to collide against the surface of the base material 11, and thereby, the solid lubricant 16 bites into the base material 11. Thereby, the solid lubricant 16 settles on the base material 11 of the lubricating surface layer portion 14. In this case, it is acceptable to add a medium which is formed from, for example, a nylon resin, a melamine resin or the like to the solid lubricant 16. These media of the nylon resin and the melamine resin have a property of being difficult to adhere to the base material 11. Because of this, the amount and distribution of the solid lubricant 16 which adheres to the surface of the base material 11 are controlled by addition of the medium to the powder of the solid lubricant 16. As a result, the medium functions as an adjusting agent for adjusting the coefficient of variation B.

After the base material 11 has been coated with the solid lubricant 16, the surface hardness is measured. The surface hardness was measured with the use of a micro-Vickers hardness tester (HM-200, manufactured by Mitutoyo Corporation). The test load was set to 10 gf (0.098 N) of which the load is relatively small. In the case of the present embodiment, a surface hardness of the base material 11 is set to HV 110 or lower. This is because if the surface hardness of the base material 11 is higher than HV 110, when the sliding member 10 slides against the counterpart member 13, excessive heat is generated by friction before the base material 11 adheres to the counterpart member 13, and tends to easily cause seizure; and as a result, the adhesion of the base material 11 from the sliding member 10 to the counterpart member 13 is disturbed. The surface hardness of the base material 11 is measured at a plurality of points in the lubricating surface layer portion 14, and the average value is used.

Examples of the sliding member 10 of the present embodiment will be described below.

### (Samples of Examples and Comparative Examples)

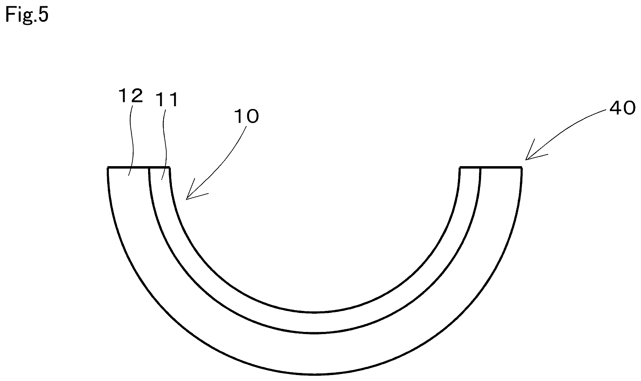

In the samples of Example and Comparative Example, the sliding member 10 is processed into a half-split bearing 40 as shown in FIG. 5. Specifically, the base material 11 is bonded to the plate-shaped backing metal layer 12. The base material 11 and the backing metal layer 12 can be bonded to each other by a known manufacturing method such as sintering or roll bonding by rolling, for example. The bonded base material 11 and backing metal layer 12 were formed as a half-cut sample by mechanical processing such as pressing or machining. The base material 11 was an Al-based alloy, and the thickness thereof was set to 0.3 mm. A cold-rolled steel sheet was used as the backing metal layer 12, and the thickness was set at 1.2 mm. The solid lubricant 16 is coated on the surface of the base material 11 which has been bonded to the backing metal layer 12. The surface of the base material 11 was degreased prior to coating with the solid lubricant 16. The surface of the base material 11 can be degreased with the use of a well-known general means. The solid lubricant 16 is sprayed onto the surface of the degreased base material 11 together with compressed highpressure air. Thereby, the solid lubricant 16 is coated on the surface of the base material 11 of the sliding member 10.

### (Seizure resistance test)

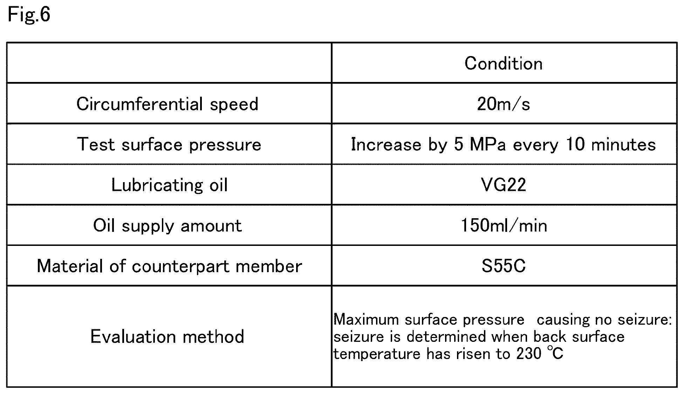

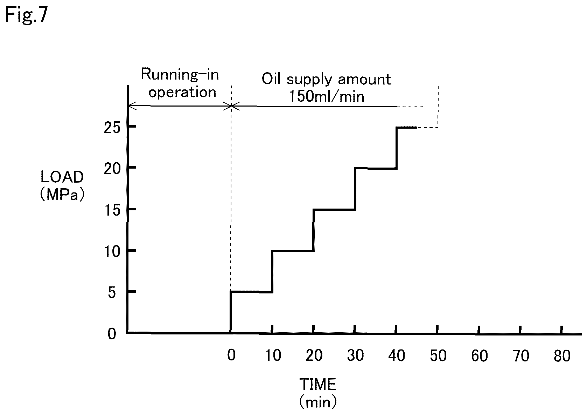

The seizure resistance of the samples of Example and Comparative Example was verified under conditions shown in FIG. 6. The seizure resistance test was conducted while the test surface pressure was increased after a running-in operation, as is shown in FIG. 7. The running-in operation was conducted in a state in which a sufficient amount of lubricating oil was supplied to a boundary between the sliding member 10 and the counterpart member 13. After that, the seizure resistance test was conducted while the oil supply amount was kept constant at 150 ml/min, and the test surface pressure was increased by 5 MPa every 10 minutes until seizure occurred. It was determined that the sample was seized when a back surface temperature of the backing metal layer 12, specifically, a temperature of a surface opposite to the counterpart member 13 of the backing metal layer 12 reached 230°C. The back surface temperature was measured with the use of an unillustrated thermocouple.

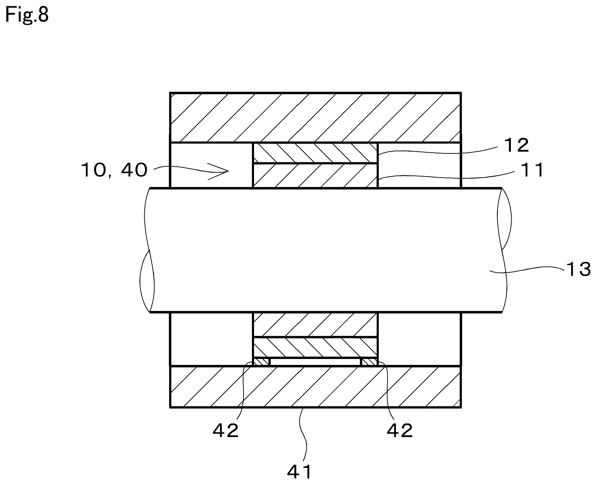

The seizure resistance test was conducted in such a way that the bearings 40 were combined into an annular shape as shown in FIG. 8, and the annular bearing was fixed to a housing 41 and was slid against the counterpart member 13. At this time, in the bearing 40 which becomes a sample, shims 42 are installed between the bearing 40 and the housing 41 at both end portions in the axial direction. The shim 42 is formed into a semi-cylindrical shape, and is installed on the lower side of the bearing 40, onto which a load is applied. A load is applied to the bearing 40 from the upper side toward the lower side in FIG. 8. The shim 42 is provided in order to apply a large load to the samples of Example and Comparative Example at an earlier stage. Specifically, due to the installation of the shim 42, the oil film of the lubricating oil tends to be easily broken, and an environment in which the solid lubricant 16 tends to be easily worn out is reproduced at an early stage. The shim 42 used in the verification was set so that the thickness was 5 µm and the whole length in the axial direction was 2 mm.

In the seizure resistance test, the maximum surface pressure at which the seizure did not occur in the sample of Comparative Example serving as a reference was defined as "1", and the result was evaluated on the basis of a degree of improvement in the maximum surface pressure at which the seizure did not occur in each sample of Example and Comparative Example which use the same solid lubricant 16. For example, when the evaluation of the seizure resistance of Example is "1.1", if the maximum surface pressure at which the seizure of Comparative Example to be an object to be compared does not occur is "100 MPa", it indicates that the maximum surface pressure at which the seizure of Example does not occur is "110 MPa".

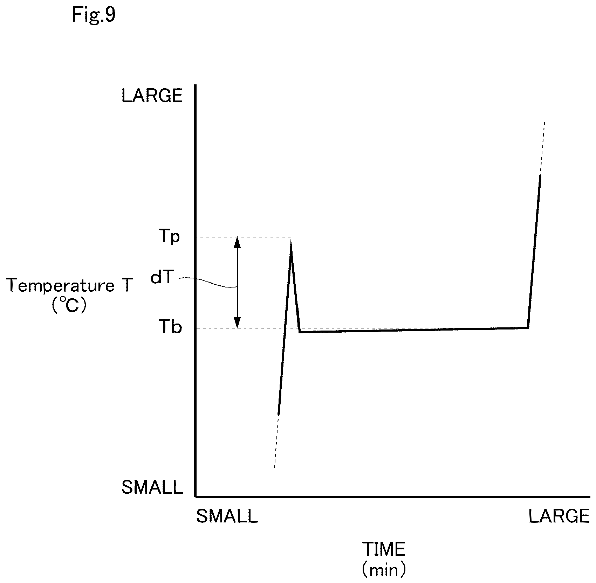

As is shown in FIG. 9, when the load applied at the time of the sliding test between the sliding member 10 and the counterpart member 13 is changed in a stepwise manner, a temperature T on the back surface side of the sliding member 10 rapidly rises immediately after the load increases and reaches the peak temperature Tp. After that, the temperature T once drops from the peak temperature Tp, then slightly rises while the applied load remains constant, and reaches the immediately preceding temperature Tb. This is because, in the seizure resistance test, the shim 42 is interposed between the sliding member 10 and the housing 41 as described above, and thereby, when the load increases, temporary shortage of the oil film tends to easily occur, and local contact with the counterpart member 13 occurs. Then, the oil film of the lubricating oil is formed, and thereby, the temperature becomes substantially stable until reaching the immediately preceding temperature Tb. In this way, the temperature T reaches the peak temperature Tp and then becomes the immediately preceding temperature Tb, each time the test load is changed. The temperature difference dT is calculated as dT = Tp-Tb, on the basis of the peak temperature Tp and the immediately preceding temperature Tb. In addition, an average of the temperature differences dT which are detected every time the load increases is defined as an average temperature difference Ta. In this way, the average temperature difference Ta is calculated on the basis of the temperature difference dT. For information, in the calculation of the average temperature difference Ta, the temperature difference dT between the immediately preceding temperature Tb at the time when the final load has been applied due to which the seizure has occurred due to the stepwise increase of the load, and the peak temperature Tp is not included.

### (Verification results)

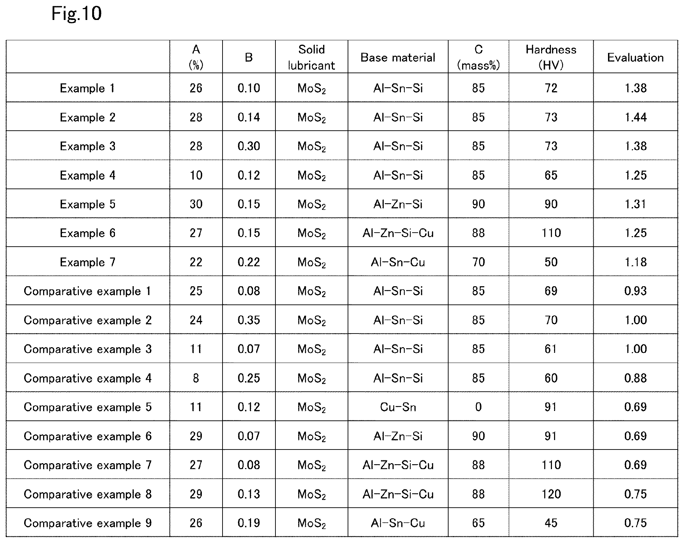

As is shown in FIG. 10, in all of Example 1 to Example 7 and Comparative Example 1 to Comparative Example 9, MoS₂ is used as the solid lubricant 16, and the influences of the area ratio A and the coefficient of variation B are verified. Among these, Comparative Example 2 having the highest seizure resistance in Comparative Example 1 to Comparative Example 9 is a standard for evaluation. Example 1 to Example 7 all satisfy the area ratio A and the coefficient of variation B of the present embodiment. In addition, in all of Example 1 to Example 4, the base material 11 is an Al-Sn-Si alloy; in Example 5, the base material 11 is an Al-Zn-Si alloy; in Example 6, the base material 11 is an Al-Zn-Si-Cu alloy; and in Example 7, the base material 11 is an Al-Sn-Cu alloy. In all of Example 1 to Example 7, the concentrations C of Al in the alloys are 70 mass% or more, and the hardnesses of the surfaces are HV 110 or lower. In contrast to this, in all of Comparative Example 1, Comparative Example 3, Comparative Example 6 and Comparative Example 7, the coefficient of variation B is smaller than the lower limit. In addition, in Comparative Example 2, the coefficient of variation B is larger than the upper limit, and in Comparative Example 4, the area ratio A is smaller than the lower limit. In Comparative Example 5, the base material 11 is a Cu-based alloy. In Comparative Example 8, the surface hardness is higher than the upper limit, and in Comparative Example 9, the Al concentration C of the base material 11 is lower than the lower limit. As described above, in all of Example 1 to Example 7 in which the area ratio A, the coefficient of variation B and the surface hardness of the present embodiment are satisfied and the base material 11 contains Al as a main component, the seizure resistance is improved.

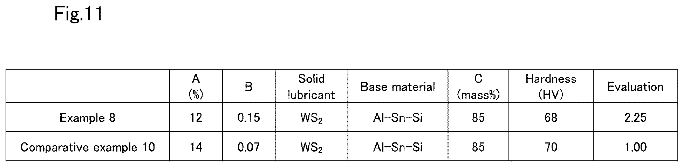

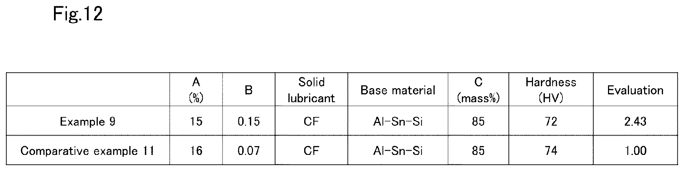

In Example 8 and Comparative Example 10 shown in FIG. 11, WS₂ is used as the solid lubricant 16. It is understood that in Example 8, the seizure resistance is improved as compared with that of Comparative Example 10 in which the coefficient of variation B is smaller than the lower limit. In addition, in Example 9 and Comparative Example 11 shown in FIG. 12, CF is used as the solid lubricant 16. It is understood that in Example 9, the seizure resistance is improved as compared with that of Comparative Example 11 in which the coefficient of variation B is smaller than the lower limit. As in the above, even when different solid lubricants 16 are used, seizure resistances of Example 8 and Example 9 in which the area ratio A, the coefficient of variation B and the surface hardness of the present embodiment are satisfied and the base material 11 contains Al as a main component are improved as compared to those of Comparative Examples.

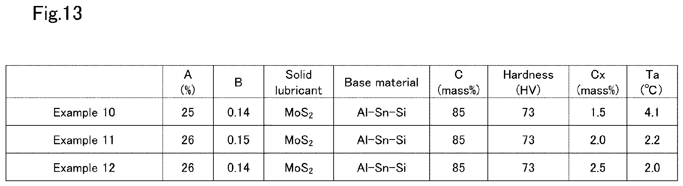

Example 10 to Example 12 shown in FIG. 13 verify in detail the influence of the back surface temperature of the bearing 40 using the sliding member 10 of this embodiment. In the present embodiment, the heat generation is evaluated by the above described temperature difference dT between the peak temperature Tp and the immediately preceding temperature Tb.

When the solid lubricant 16 is smoothly transfers from the sliding member 10 and adheres to the counterpart member 13 by sliding between the sliding member 10 and the counterpart member 13, the average temperature difference Ta, specifically, the average value of the differences between the peak temperature Tp and the immediately preceding temperature Tb becomes small. This is because the friction generated between the sliding member 10 and the counterpart member 13 is reduced from the initial stage of sliding by the transfer and adhering of the solid lubricant 16, and is stably reduced for a long period of time. In other words, this shows that due to the transfer of the solid lubricant 16, even when a sudden load change is applied from the initial stage of sliding for a long period of time, the heat generation due to friction is reduced and the seizure resistance is improved.

Here, when Example 10 is compared with Example 11 and Example 12, the average temperature difference Ta in Example 11 and Example 12 is smaller than that in Example 10. In Example 11 and Example 12 in which the average temperature difference Ta is small, the average element concentration Cx in the observation region 21 is higher than that in Example 10. The average element concentration Cx is an average value of the concentrations of the constituent element of the solid lubricants 16 which exist in the lubricating surface layer portion 14 in the observation region 21. In other words, the average element concentration Cx is a value which indicates how much of the constituent element is contained in the observation region 21 set in the lubricating surface layer portion 14. Specifically, the observation region 21 of 30 µm ×30 µm is divided into p pixels. Each pixel of the divided pixels is subjected to measurement of the concentration of a constituent element such as Mo, W or F. Then, the measured concentrations of the constituent elements for each pixel are integrated. The integrated concentration of the constituent element is divided by the number of pixels p of the observation region 21. Thereby, the average element concentration Cx in the observation region 21 is calculated. In other words, the average element concentration Cx is calculated by Cx=(sum of concentrations of constituent elements in each pixel / number of pixels in observation region). In this case, it is preferable that distance between the pixels is 1 µm or smaller, and that the number of pixels p is 900 or more. In the case of the present embodiment, the number of pixels p of the observation region 21 was set to p = 200 × 200 = 40,000.

In the present embodiment, the average element concentration Cx is set to 2.0 mass% ≤Cx≤ 12 mass%. In this way, when the average element concentration Cx is 2.0 mass% or higher, the solid lubricant 16 exists in a large amount also in the thickness direction of the lubricating surface layer portion 14. Because of this, even if the solid lubricant 16 repeatedly transfers from the sliding member 10 and adheres to the counterpart member 13 is repeated with the sliding, the solid lubricant 16 is supplied from the sliding member 10 to the counterpart member 13 over a long period of time. As a result, the heat generation during the sliding between the sliding member 10 and the counterpart member 13 becomes small over a long period of time from the initial stage of the sliding. Note that when the average element concentration Cx is excessive, the manufacture of the sliding member 10 is hindered. For this reason, the upper limit of the average element concentration Cx is set to 12 mass%.

The present invention described in the above is not limited to the above embodiment, and can be applied to various embodiments without departing from the gist of the present invention.

### Reference Signs List

In the drawings, 10 denotes a sliding member, 11 denotes a base material, 14 denotes a lubricating surface layer portion, 16 denotes a solid lubricant, 17 denotes a base material surface, and 21 denotes an observation region.

## Claims

1. A sliding member (10) comprising: a base material (11) containing Al as a main component and having surface hardness of HV 110 or lower; and
a lubricating surface layer portion (14) being provided on a side of the base material (11), which slides against a counterpart member (13), and containing a solid lubricant (16), wherein
the lubricating surface layer portion (14) comprises a sliding surface (15) on the counterpart member (13) side, and
a base material surface (17) being a surface of the base material (11) and the solid lubricant (16) are exposed on the sliding surface (15); and
when an arbitrary observation region (21) in which an area S of 30 µm × 30 µm is S = 900 µm² is set on the sliding surface (15),
in the observation region (21), when an area occupied by the exposed solid lubricant (16) is defined as Sp, and an area ratio A (%) is defined as area ratio A = Sp/S ×100, and
when the observation region (21) is divided into nine unit regions (22) of 10 µm × 10 µm, a standard deviation in the observation region (21) being obtained from a ratio of an area occupied by the solid lubricant (16) in each of the nine unit regions (22) is defined as D, and a coefficient of variation B is defined as coefficient of variation B = D/A, $10 \leq A \leq 40 ,$ and $0.1 \leq B \leq 0.3$ hold.

2. The sliding member according to claim 1, wherein the area ratio A satisfies 10≤A≤30.

3. The sliding member according to claim 1, wherein the solid lubricant (16) is a sulfide.

4. The sliding member according to claim 3, wherein the solid lubricant (16) is MoS₂ or WS₂.

5. The sliding member according to claim 1, wherein in the observation region (21), an average concentration Cx of a constituent element having a largest atomic weight among elements constituting the solid lubricant (16) that exists in the lubricating surface layer portion (14) satisfies: $2.0 mass % \leq Cx \leq 12 mass % .$
